Europäisches Patentamt

European Patent Office

Office européen des brevets

(19)

(11) Publication number: **0 112 317**
**A1**

(12)

# EUROPEAN PATENT APPLICATION

(21) Application number: **83850338.1**

(22) Date of filing: **16.12.83**

(51) Int. Cl.³: **C 01 F 11/46**

(30) Priority: **22.12.82 SE 8207343**

(43) Date of publication of application:
**27.06.84 Bulletin 84/26**

(84) Designated Contracting States:
**AT BE CH DE FR GB IT LI NL**

(71) Applicant: **Boliden Aktiebolag**
**Box 5508**
**S-114 85 Stockholm(SE)**

(72) Inventor: **Kullenberg, Nils Eric Ferdinand**
**Jonstorpsvägen 96**
**S-26300 Höganäs(SE)**

(72) Inventor: **Persson, Lars Erik Herbert**
**Allégatan 26**
**S-25260 Helsingborg(SE)**

(74) Representative: **Inger, Lars Ulf Bosson et al,**
**Boliden AB Patent & Trade Marks Box 5508**
**S-114 85 Stockholm(SE)**

(54) A method for re-crystallizing gypsum.

(57) The present invention relates to the preparation of fine, particulate anhydrite gypsum for use as a filler in paper manufacture, or as a paper-coating agent. Sulphuric acid having a concentration of at least 35% by weight in water is heated to at least 60%, whereafter gypsum in the form of dihydrate and/or hemihydrate gypsum is dissolved to saturation in the acid, the gypsum being added in an amount of at least 100 grams per liter of sulphuric acid solution. Anhydrite gypsum is then permitted to precipitate, and the gypsum isolated and dried.

The resultant gypsum has a particle size of less than 10μm.

EP 0 112 317 A1

A METHOD FOR RE-CRYSTALLIZING GYPSUM

DESCRIPTION

Technical Field

The present invention relates to a method for re-crystallizing gypsum to obtain a fine, particulate gypsum in anhydrite form, by reacting the gypsum with sulphuric acid.

The object of the invention is to provide a possibility of producing fine, particulate gypsum having a particle size beneath 10 um, preferably beneath 3 um, particularly gypsum in anhydrite form, suitable for use as a filler or as a coating agent in the cellulose industry. In this respect, the gypsum should be of high quality with respect to whiteness.

Background Art

The use of gypsum as a filling agent for paper and other cellulose-fibre products for the purpose of reducing the amount of fibre required has been both suggested and tested in the art. Such use, however, requires the gypsum to be in a fine, particulate form, meaning a particle size of < 10 $\mu$m when used as a filler, and a particle size of < 3 $\mu$m, preferably < 1 $\mu$m when used as a coating agent. Although gypsum can be ground to such particle sizes, large quantities of energy are consumed in so doing.

It is also known to re-structuralize calcium sulphate which contains water of crystallization to anhydrite form, by heating the gypsum, which may be in hemihydrate or dihydrate form, in sulphuric acid, whereupon the sulphuric acid absorbs the water, to form anhydrite gypsum. There is used in this respect a 70%-sulphuric acid, which is permitted to absorb so much water as to be not lower than 40%. The gypsum is therefore moist with sulphuric acid, and change in the original crystal/particle size of the gypsum is achieved. (SE-A- 74392 = US-A- 2,021,910).

A similar method for producing gypsum grades containing water of crystallization is disclosed in US-A- 1,943,497.

A method for forming finely-divided calcium sulphate is described in FR-A- 719,903, in which method calcium carbonate is processed with forming sulphuric acid, to produce a finely-divided anhydrite gypsum.

The Norwegian Patent Specification NO-A- 54,999 describes a method for producing an extremely fine, and in appearance amorphous, calcium, in which method anhydrite gypsum is heated and mixed with 24%-$H_2SO_4$ at a temperature of $100^oC$ in an amount such that 4-5 grams of $SO_3$ is consumed for every 100 grams of $CaSO_4$. The gypsum is therefore moistened with sulphuric acid. The temperature is maintained until the sulphuric acid has been concentrated and the desired transition to the new crystalline structure has taken place.

The British Patent Specification GB-A- 848,617 (C = DE-B- 1.118.188) describes a method for producing anhydrite gypsum in pigment form, in which method gypsum having particle size below 200 mesh (75 µm) is permitted to form a suspension with water (20-25% dry-solids content). The suspension is then admixed with concentrated sulphuric acid (74-80% concentration) at a temperature of 20-80$^oC$, after an initial formation of anhudrite-gypsum seeds, whereupon anhudrite gypsum is formed.

EP-A1- 0 012 487 describes a method for producing anhydrite gypsum from dihydrite gypsum by slurrying the latter in 40-65% by weight sulphuric acid at a temperature of 40-90% for from 5 to 30 minutes. The resultant anhydrite gypsum had a particle size of 0.5-3 µm. Recrystallization is optionally effected in the presence of multi-valent metal ions.

EP-A2- 0 044 120 also describes a method for producing anhydrite gypsum, in which method a given coarse fraction of dihydrate gypsum obtained from a wet-phosphoric acid process is slurried with concentrated sulphuric acid, to recrystallize the dihydrate gypsum present in the slurry to anhydrite gypsum.

A serious disadvantage with these previously known methods is that they fail to eliminate certain particulate, acid-insoluble impurities present in the gypsum and deriving from the phosphoric-acid manufacturing process, and that these particles remain in the gypsum. Since these particles are black, or at least dark in colour, they impair the quality of the gypsum, particularly when it is to be used as a light pigment or filler.

Description of the present invention

It has now surprisingly been found possible to produce fine, particulate gypsum with a controlled particle size and while eliminating any particulate, acid-insoluble impurities present by means of the present invention, which is characterized by heating sulphuric acid having a concentration of at least 35% by weight in water to a temperature of at least $60^{0}C$, whereafter gypsum, in hemihydrate and/or dihydrate form, is dissolved to saturation in an amount equalling at least 100 grams per liter of sulphuric-acid solution, whereafter fine, particulate anhydrite gypsum is allowed to precipitate, the gypsum being isolated and dried.

Further characteristic features of the invention are set forth in the accompanying claims.

With respect to screen analysis, by bringing the gypsum in solution to a high degree of saturation there is obtained an extremely homogenous crystalline fraction. In addition there is obtained a considerable reduction in the volumetric weight of the resultant anhydrite gypsum compared with the weight by volume of the ingoing gypsum, which favours the use of the product as a filler and pigment-filler in cellulose-fibre material, or as a coating agent for cellulose-fibre products.

The gypsum has a normal solubility in the aforesaid sulphuric-acid solution of less than 10 grams per litre.

In general, when carrying out the method according to the invention a 35%-sulphuric-acid solution is heated to a temperature of 85°C, whereafter 400 grams of $\alpha$ -hemihydrate gypsum is dissolved in the solution, this gypsum being, for example, of the kind obtained when manufacturing phosphoric acid in accordance with the wet-process mode, i.e. a reaction between sulphuric acid and raw phosphate. Immediately the hemihydrate gypsum dissolves extremely fine, anhydrite-gypsum crystals are precipitated, the particle size of these crystals being < 10 μm. The sulphuric-acid solution is held at 85°C for from 1 to 3 hours, any flourine or phosphorous con-taminents present in the gypsum dissolving in the process.

When the gypsum dissolves, any dark-coloured, acid-insoluble impurities present in the raq gypsum immediately fall to the bottom of the vessel in which the gypsum is dissolved, and can be isolated by pouring off the supernatent, or by some other form of separation process, such as in a hydrocyclone for example.

The solution of anhydrite-gypsum and sulphuric acid is then filtered in a hot state, whereafter the filter cake is washed free from acid solution with warm water. The amount of $\underline{F}$ and $P_2O_5$ present in the resultant anhydrite gypsum is, in each case, less than 0.3%.

The product can be finally dried by calcining the same at a temperature above 200°C, whereupon the solubility of the gypsum further decreases, which increases the retention of the gypsum in a cellulose--fibre stock system.

When a particularly fine gypsum is required (< 3 μm) Na-ions in the form of NaCl, $NaNO_3$ or $Na_2SO_4$ are added to the solution of gypsum and sulphuric acid. In this respect, in order to achieve a satisfactory result, the Na-ion concentration should be from 0.3 - 3 mol/litre.

The invention will now be described in more detail with reference to the following working examples, although it will be understood that the invention is not limited thereto.

Example 1

250 ml of 35%-$H_2SO_4$ were heated to 85$^0$C, whereafter 75 grams of $\alpha$ -hemihydrate gypsum obtained from a wet-phosphoric acid process were dissolved in the hot acid. The gypsum was dissolved during the first 60-90 minutes, after which time fine, particulate gypsum precipitated. The reaction was terminated after 120 minutes, whereafter the resultant crystalline substance was filter while still hot, washed with warm water to remove any acid present, and then dried. The particle size was < 3 $\mu$m (mean particle value according to Counter Colter calculation). The gypsum existed as 100% anhydrite gypsum.

Examples 2-29

The following fine, particulate gypsums were produced in accordance with Example 1 above.

6

| Ex | $H_2SO_4$ ml | $H_2SO_4$ % | $H_3PO_4$ ml | $H_3PO_4$ % | Temp. °C | Na mol/l | % anhydrite gypsum | Particle size μm [x] |
|---|---|---|---|---|---|---|---|---|
| 2 | 50 | 95 | 200 | 54 | 85 | - | 100 | 30 (20% < 4 μm) |
| 3 | 100 | 95 | 150 | 54 | 85 | - | 100 | 8 |
| 4 | 200 | 95 | 50 | 54 | 85 | - | 100 | 4 |
| 5 | 100 | 95 | 150 | 54 | 85 | 1.4 | 100 | 30 |
| 6 | - | - | 250 | 54 | - | - | 0 | 30 |
| 7 | 0 | - | 250 | 35 | 85 | - | 0 | 50 |
| 8 | 50 | 95 | 200 | 35 | 85 | - | 5 | 40 |
| 9 | 100 | 95 | 150 | 35 | 85 | - | 100 | 30 (20% < 5 μm) |
| 10 | 150 | 95 | 100 | 35 | 85 | - | 100 | 25 (20% < 2.5 μm) |
| 11 | 200 | 95 | 50 | 35 | 85 | - | 100 | 25 (20% < 2.0 μm) |
| 12 | 0 | - | 250 | 35 | 85 | 2.8 | 0 | 40 |
| 13 | 100 | 95 | 150 | 35 | 85 | 1.4 | 100 | 15 (25% < 5 μm) |
| 14 | 250 | 40 | 0 | - | 100 | - | 100 | 8 (85% 2.5-15 μ) |
| 15 | 250 | 40 | 0 | - | 85 | 0.28 | 100 | 13 (80% 5-15 μ) |
| 16 | 250 | 40 | 0 | - | 85 | 1.4 | 100 | 12 |
| 17 | 250 | 40 | 0 | - | 85 | - | 100 | 8 |
| 18 | 150 | 40 | 100 | 35 | 85 | - | 5 | 30 (80% < 12 μ) |
| 19 | 250 | 40 | 0 | - | 75 | - | 100 | 8 |
| 20 | 250 | 40 | 0 | - | 65 | - | 100 | 8 |
| 21 | 250 | 40 | 0 | - | 55 | - | 2 | 30 |
| 22 | 200 | 40 | 50 | 35 | 85 | - | 22 | 20 |
| 23 | 250 | 35 | 0 | - | 85 | - | 100 | 8 |
| 24 | 250 | 50 | 0 | - | 85 | - | 100 | 10 |
| 25 | 250 | 60 | 0 | - | 85 | - | 100 | 8 |
| 26 | 250 | 70 | 0 | - | 85 | - | 100 | 4 |
| 27 | 250 | 70 | 0 | - | 50 | - | 200 | 10 |
| 28 | 250 | 70 | 0 | - | 40 | - | 100 | - |
| 29 | 250 | 70 | 0 | - | 20 | - | 100 | 2 |

x) The particle-size values relate to the upper limit for 50% of the fraction.

In Examples 2-13 a 95%-sulphuric acid was used, the phosphoric acid being a 54%-acid so that the amount of water present in the system was the same as in Example 1.

Example 30

$\alpha$-Hemicalcium sulphate derived from a wetprocess phosphoric plant was added directly after isolation to water in which it was recrystallized to dihydrate calcium sulphate. The calcium sulphate dihydrate was isolated as a filter cake and was added to sulphuric acid in an amount of 400 g per liter of sulphuric acid. The concentration of sulphuric acid being such as after introduction of the wet filter cake the resulting concentration being 40% $H_2SO_4$. The temperature increased to about 60°C at the addition of the filter cake and was then allowed to decrease to ambient under recrystallization of calcium sulphate anhydrite in particulate form during 90 minutes. The particulate anhydrite gypsum had a particle size of 96% less than 10 µm, whereby 77 per cent thereof had a particle size of between 2 and 6 µm.

CLAIMS

1. A method for re-crystallizing gypsum to obtain a fine, particulate gypsum in anhydrite form by reacting the gypsum with sulphuric acid, with an optional addition of phosphoric acid, characterized by heating sulphuric acid having a concentration of at least 35% by weight in water to a temperature of at least 60°C; dissolving gypsum in hemihydrate and/or dihydrate form to supersaturation in said sulphuric acid, said gypsum being added in an amount of at least 100 grams per litre of acid; permitting fine, particulate gypsum to precipitate; and isolating and drying the gypsum precipitate.

2. A method according to claim 1, characterized in that the sulphuric acid concentration is 35-40% by weight.

3. A method according to claim 1, characterized in that gypsum is dissolved to supersaturation in an amount of 200-400, and up to 600 grams per liter of sulphuric-acid solution.

4. A method according to claim 1, characterized in that Na-ions are added to the sulphuric-acid solution prior to the precipitation of the gypsum, in order to further reduce the particle size of the gypsum precipitate.

5. A method according to claim 1, characterized in that the isolated anhydrite gypsum is calcined at a temperature above 200°C.

6. A method according to claim 4, characterized by adding Na-ions in the form of a sodium salt taken from the group sodium chloride, sodium nitrate and sodium sulphate, in an amount of 0.3 - 3.0 moles of Na per liter of acid.

7. A method according to claim 1, characterized by adding phosphoric acid to the sulphuric acid before dissolving the gypsum therein.

8. A method according to claim 7, characterized in that the phosphoric acid constitutes 20-400% of the amount of sulphuric acid present.

9. A method according to claim 1, characterized in that $\alpha$-hemihydrate gypsum is transferred by recrystallization in water to dihydrate gypsum, which dihydrate gypsum is added to the sulphuric acid to supersaturation, whereupon a fine particulate anhydrite gypsum is isolated.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | SE-B-336 775 (SICIÉTÉ DE PRAYON) | | C 01 F 11/46 |
| A | US-A-1 943 497 (FOORD VON BICHOWSKY) | | |
| X | DE-B-1 118 177 (TITANGESELLSCHAFT MBH) *page 2, left-hand column, lines 7-27* | 1 | |
| X | GB-A-848 617 (NATIONAL LEAD CO) *Claim 1* | 1 | |
| X | EP-A-0 044 120 (STAMICARBON B.V.) *Page 7, lines 4-22* | 1 | |
| X | EP-A-0 012 487 (STAMICARBON B.V.) *Claims 1-7* | 1 | |
| X | NO-C-47 381 (IG FARBEN INDUSTRI AG) *Examples 1 and 3* | 4 | |

TECHNICAL FIELDS SEARCHED (Int. Cl. ³)

C 01 F

C 09 C

The present search report has been drawn up for all claims

| Place of search | Date of completion of the search | Examiner |
|---|---|---|
| STOCKHOLM | 10-03-1984 | LUNDELL B-M |